# EUROPÄISCHE PATENTANMELDUNG

(11) **EP 2 465 738 A2**
(43) Veröffentlichungstag der Anmeldung: **20.06.2012**
(21) Anmeldenummer: 11188004.3
(22) Anmeldetag: 07.11.2011
(51) Int. Cl.: B60S 1/34

(54) **Wischsystem mit Koppelgetriebe**

(30) Priorität: 14.12.2010 DE 102010063020
(71) Anmelder: Robert Bosch GmbH, 70442 Stuttgart (DE)
(72) Erfinder: Wolfgarten, Sven, 77815 Buehl (DE); Trenkle, Lothar, 77815 Buehl (DE); Rapp, Harald, 77815 Buehl (DE); Burkard, Hermann, 76473 Iffezheim (DE)

(57) **Zusammenfassung**

Ein Koppelgetriebe für ein Wischsystem (100) an einem Kraftfahrzeug (105) umfasst: einen Wischerarm (120); einen Antriebshebel (130) mit einem ersten Ende, das mittels eines ersten Drehgelenks (140) mit dem Wischerarm verbunden ist; einen Steuerhebel (135) mit einem ersten Ende, das mittels eines zweiten Drehgelenks (145) mit dem Wischerarm (120) verbunden ist; ein drittes Drehgelenk (150) zur Lagerung eines zweiten Endes des Antriebshebels (130) gegenüber einem Karosserieelement (110) des Kraftfahrzeugs (105); wobei das dritte Drehgelenk (150) eine Welle (160) zur Übertragung einer Drehbewegung eines Antriebsmotors (165) auf den Antriebshebel (130) umfasst; und ein viertes Drehgelenk (155) zur Lagerung eines zweiten Endes des Steuerhebels (155) gegenüber dem Karosserieelement (110). Dabei umfasst das vierte Drehgelenk (155) eine Achse (210), gegenüber welcher der Steuerhebel (135) drehbar gelagert ist.

## Beschreibung

Die Erfindung betrifft ein Koppelgetriebe für ein Wischsystem. Insbesondere betrifft die Erfindung ein Koppelgetriebe für ein Wischsystem an einem Kraftfahrzeug.

### Stand der Technik

Um in einem Wischsystem an einem Kraftfahrzeug ein Wischerblatt in einer oszillierenden Bewegung über eine Sichtscheibe des Kraftfahrzeugs zu führen, und dabei einen vorbestimmten Wischbereich möglichst optimal zu überstreichen, ist es bekannt, eine oszillierende Drehbewegung eines Wischerantriebs mittels eines Viergelenk-Koppelgetriebes auf den Wischarm umzusetzen. Der vom Wischerblatt überstrichene Bereich ist dann nicht mehr auf ein einfaches Kreissegment beschränkt, sondern kann an eine Form der Sichtscheibe angepasst sein. Dadurch kann ein Bereich der Sichtscheibe, der nicht vom Wischerblatt überstrichen werden kann, minimiert sein, so dass ein Reinigungsergebnis des Wischerblatts auf der Sichtscheibe verbessert ist.

Üblicherweise ist der Wischerarm an zwei unterschiedlichen Punkten drehbar mit zwei Hebeln verbunden, die in einem vorbestimmten Abstand an einer Karosserie des Kraftfahrzeugs gelagert sind, an der die zu reinigende Sichtscheibe befestigt ist. Relative Abstände der insgesamt vier Lagerpunkte an den beiden Hebeln ("Viergeienk") bestimmen die Bewegung des Wischerarms. Ein oszillierender Antrieb eines solchen Wischersystems erfolgt üblicherweise über nur einen der beiden Hebel, indem der Hebel mittels eines Elektromotors um den Lagerpunkt hin und her gedreht wird, der mit der Karoserie verbunden ist.

DE 10 2005 046 653 A1 zeigt eine Scheibenwischvorrichtung mit einem Viergelenk-Koppelgetriebe.

Scheibenwischsysteme mit Viergelenk-Koppelgetrieben weisen eine relativ große Anzahl einzelner Elemente auf, die relativ hohe Herstellungskosten des Wischsystems bedingen können. Der Erfindung liegt daher die Aufgabe zugrunde, ein vereinfachtes Koppelgetriebe für ein Wischsystem an einem Kraftfahrzeug bereitzustellen.

Die Erfindung löst die Aufgabe mittels eines Koppelgetriebes mit den Merkmalen von Anspruch 1. Unteransprüche geben bevorzugte Ausführungsformen wieder.

### Offenbarung der Erfindung

Ein Koppelgetriebe für ein Wischsystem an einem Kraftfahrzeug umfasst einen Wischerarm, der mittels eines Antriebshebels und eines Steuerhebels mit einer Karosserie eines Kraftfahrzeugs verbunden ist, wobei an jeder der vier Verbindungsstellen ein Gelenk vorgesehen ist. Ein Antrieb erfolgt über eine Welle des Drehgelenks des Antriebshebels an der Karosserie. Das Drehgelenk, das den Steuerhebel an der Karosserie lagert, umfasst eine Achse, gegenüber welcher der Steuerhebel drehbar gelagert ist.

Das erfindungsgemäße Koppelgetriebe ist ein Viergelenk-Koppelgetriebe, bei dem die beiden Drehgelenke, die zur Verbindung mit dem Karoserieelement eingerichtet sind, unterschiedlich ausgeformt sind. Notwendigerweise ist das dritte Drehgelenk relativ stark dimensioniert, um die beim Antrieb des Koppelgetriebes auftretenden Kräfte und Momente gegenüber dem Karoserieelement abstützen zu können. Im Unterschied zum Stand der Technik kann das vierte Drehgelenk erfindungsgemäß deutlich schwächer als das dritte Drehgelenk ausgeführt werden, da es keine Momente und nur relativ kleine radiale Kräfte gegenüber dem Karoserieelement abstützen muss. Dadurch kann eine Anzahl erforderlicher Einzelteile des Koppelgetriebes verringert werden, wodurch Herstellungs- und Montagekosten eingespart sein können. Ferner kann das vierte Drehgelenk kleiner und leichter ausgeführt werden, sodass Ressourcen zur Herstellung und zum Betrieb des Koppelgetriebes geschont werden können. Außerdem ist es nicht erforderlich, dass das vierte Drehgelenk durch eine Aussparung des Karoserieelements hindurchführt, sodass in diesem Bereich ein anderes Bauteil des Kraftfahrzeugs zu liegen kommen kann.

In einer bevorzugten Ausführungsform umfasst der Steuerhebel eine Buchse, in der die Achse des vierten Drehgelenks drehbar aufgenommen ist. Reibungskräfte zwischen dem Steuerhebel und der Achse können so minimiert sein.

Das vierte Drehgelenk kann ein Lagergehäuse zur Verbindung mit dem Karoserieelement aufweisen, mit welchem die Achse starr verbunden ist. Das Lagergehäuse kann eine Form aufweisen, die universell an unterschiedlichen Typen von Kraftfahrzeugen befestigt werden kann. Alternativ ist es möglich, unterschiedliche Gehäuse für unterschiedliche Typen von Kraftfahrzeugen vorzusehen, so dass das Koppelgetriebe nach dem Baukastenprinzip an unterschiedliche Kraftfahrzeuge angepasst werden kann.

Eine Welle des dritten Drehgelenks und die Achse des vierten Drehgelenks können an ihren Enden Außengewinde zur Aufnahme von Muttern aufweisen, die den Antriebshebel bzw. den Steuerhebel in axialer Richtung fixieren. Trotz der unterschiedlichen Ausführung des dritten und des vierten Drehgelenks können auf diese Weise die Montage des Antriebshebels und des Steuerhebels auf der Welle bzw. der Achse einheitlich sein. Ein Werkzeugwechsel während der Montage der beiden Hebel kann dadurch nicht erforderlich sein.

Die Achse kann einen Absatz zur Begrenzung der axialen Position der Mutter aufweisen. Dadurch kann die Mutter bezüglich der Achse festgezogen werden, ohne dass dadurch die Gefahr besteht, den Steuerhebel einzuklemmen und damit zu immobilisieren.

Zusätzlich kann die Achse einen weiteren Absatz aufweisen, wobei die axiale Position des Steuerhebels zwischen der Mutter und dem zweiten Absatz begrenzt ist. Vorzugsweise ist eine axiale Ausdehnung des Steuerhebels im Bereich des vierten Drehgelenks kleiner als ein Abstand zwischen den beiden Absätzen, so dass der Steuerhebel ein vorbestimmtes Axialspiel auf dem vierten Drehgelenk hat. Dadurch kann der Steuerhebel auf der Achse sowohl in axialer als auch in radialer Richtung so gelagert sein, dass ein reibungs- und verschleißarmer Betrieb auch über längere Perioden hinweg möglich ist.

Die Erfindung wird nun mit Bezug auf die beigefügten Figuren genauer beschrieben, in denen:
- Fig. 1: ein Wischsystem an einem Kraftfahrzeug;
- Fign. 2a, 2b: ein Drehgelenk des Wischsystems aus Fig. 1;
- Fig. 3: ein weiteres Drehgelenk des Wischsystems aus Fig. 1;
- Fig. 4: einen Querschnitt durch einen Hebel des Wischsystems aus Fig. 1; und
- Fig. 5: einen Querschnitt durch einen anderen Hebel des Wischsystems auf Fig. 1
darstellt.

### Genaue Beschreibung von Ausführungsbeispielen

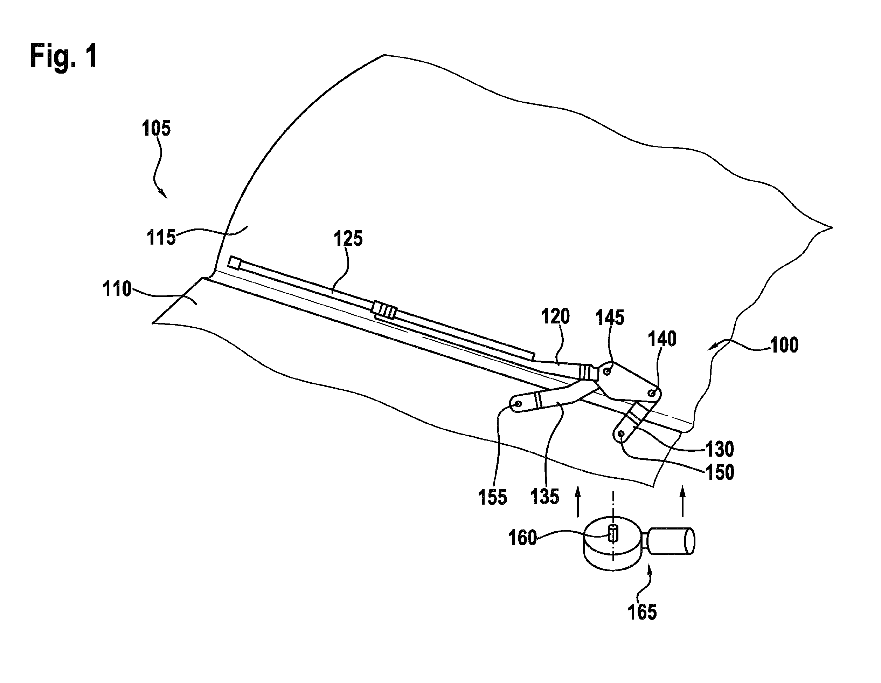

Fig. 1 zeigt ein Wischsystem 100 an einem Kraftfahrzeug 105. Vom Kraftfahrzeug 105 sind lediglich ein Karosserieelement 110 und eine Sichtscheibe 115 dargestellt, die beispielsweise eine Frontscheibe sein kann.

Ein Wischerarm 120 ist mit einem Wischerblatt 125 verbunden, das dazu eingerichtet ist, mittels des Wischerarms 120 über die Sichtscheibe 115 geführt zu werden. Der Wischerarm 120 ist mittels eines Antriebshebels 130 und eines Steuerhebels 135 am Karosserieelement 110 gelagert. Ein erstes Drehgelenk 140 verbindet ein vom Wischerblatt 125 entferntes Ende des Wischerarms 120 mit einem ersten Ende des Antriebshebels 130. Ein zweites Drehgelenk 145 verbindet ein erstes Ende des Steuerhebels 135 mit dem Wischerarm 120 in einem Bereich zwischen dem ersten Drehgelenk 140 und dem Wischerblatt 120. An einem zweiten Ende ist der Antriebshebel 130 mittels eines dritten Drehgelenks 150 gegenüber dem Karosserieelement 110 gelagert. Das zweite Ende des Steuerhebels 135 ist mittels eines vierten Drehgelenks 155 gegenüber dem Karosserieelement 110 gelagert.

Die vier Drehgelenke 140, 145, 150 und 155 sind in der Darstellung von Fig. 1 in Form eines konvexen Vierecks zueinander angeordnet, obwohl auch andere Konstellationen möglich sind. Eine Bewegungskurve des Wischerblatts 125 über die Sichtscheibe 115 wird im Wesentlichen durch die relativen Positionen der Drehgelenke 140 bis 155 bestimmt.

Das dritte Drehgelenk 150 umfasst eine Welle 160, die mit einem Antriebsmotor 165 verbunden ist. In der Darstellung von Fig. 1 ist der Antriebsmotor 165 zu Darstellungszwecken nach Art einer Explosionszeichnung nach unten verschoben und trägt einseitig die Welle 160.

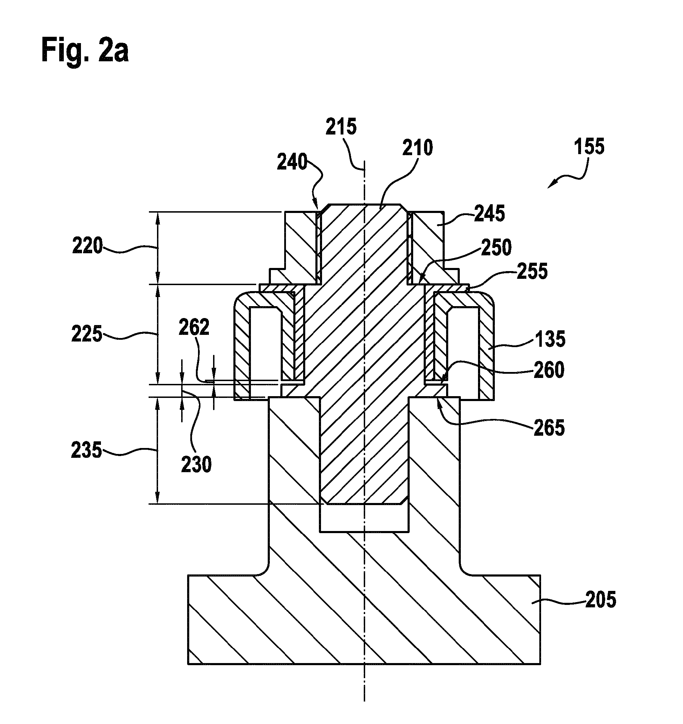

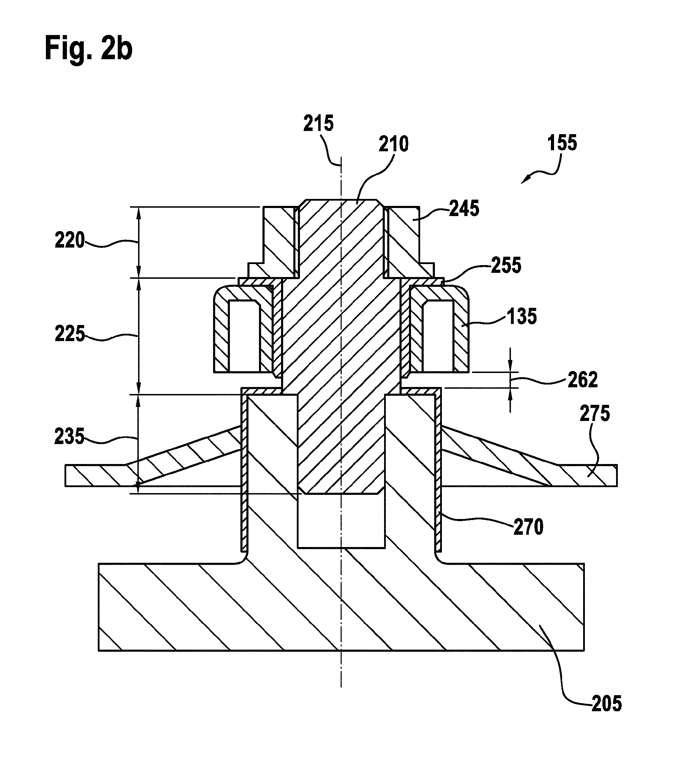

Fig. 2 zeigt das vierte Drehgelenk 155 des Wischsystems 100 aus Fig. 1. Das vierte Drehgelenk 155 umfasst ein Lagergehäuse 205 und eine Achse 210. Die Achse 210 überträgt keine Drehmomente an den Steuerhebel 155 und wird im Folgenden als Blindlagerwelle 210 bezeichnet. Fig. 2a zeigt eine erste Ausführungsform und Fig. 2b zeigt eine zweite Ausführungsform des Drehgelenks 155.

Zunächst Bezug nehmend auf Fig. 2a besteht das Lagergehäuse 205 vorzugsweise aus einem Aluminium-, Zink- oder Kunststoff-Guss und ist nur in einem Bereich der Blindlagerwelle 210 dargestellt. Nicht dargestellt ist ein Bereich des Lagergehäuses 205, der zur Verbindung mit dem Karosserieelement 110 aus Fig. 1 vorgesehen ist. Dieser Bereich richtet sich nach den Gegebenheiten des Karosserieelements 110 und kann in unterschiedlichen Ausformungen hergestellt sein, die einem Fachmann geläufig sind. Insbesondere kann das Lagergehäuse dazu eingerichtet sein, einseitig am Karosserieelement 110 oder durch eine Öffnung in dem Karosserieelement 110 verlaufend montiert zu werden.

Die Blindlagerwelle 210 verläuft im Wesentlichen rotationssymmetrisch zur Längsachse 215. Von oben nach unten ist die Blindlagerwelle 210 in vier aneinander angrenzende zylindrische Abschnitte 220 bis 235 unterteilt. Der erste Abschnitt 220 trägt ein Außengewinde 240, das im Eingriff mit einem korrespondierenden Innengewinde einer Mutter 245 steht. Der zweite Abschnitt 225 weist einen größeren Durchmesser als der erste Abschnitt 220 auf, wodurch zwischen den Abschnitten 220 und 225 ein erster Absatz 250 gebildet ist. Die Mutter 245 ist auf die Blindlagerwelle 210 so weit aufgeschraubt, dass sie mit ihrer Unterseite am ersten Absatz 250 aufliegt.

Im Bereich des zweiten Abschnitts 225 trägt die Blindlagerwelle 210 eine Lagerbuchse 255. Die Lagerbuchse 255 ist vorzugsweise aus einem Metall gerollt oder aus einen Kunststoff hergestellt und so dimensioniert, dass sie bezüglich der Blindlagerwelle 210 frei drehbar ist. Dabei ist die Lagerbuchse 255 in axialer Richtung weniger lang als der zweite Abschnitt 225, so dass sich ein axiales Lagerspiel 262 ergibt. Die Lagerbuchse 255 weist an ihrem oberen Ende einen Bund auf. Die Lagerbuchse 255 ist mit Presssitz mit dem Steuerhebel 135 verbunden, der im Bereich der Lagerbuchse 255 eine topfförmige Aufnahme aufweist.

Der dritte Abschnitt 230 der Blindlagerwelle 210 weist in der dargestellten Ausführungsform einen noch größeren Durchmesser als der zweite Abschnitt 225 auf, wobei im Bereich des Übergangs zwischen den Abschnitten 225 und 230 ein zweiter Absatz 260 besteht. Der zweite Absatz 260 begrenzt eine axiale Position der Lagerbuchse 255 nach unten. Alternativ kann der zweite Absatz 260 auch entfallen, wobei der dritte Abschnitt 230 maximal den gleichen Durchmesser wie der zweite Abschnitt 225 aufweist. Die axiale Position der Lagerbuchse 255 nach unten wird dann alternativ durch eine horizontale Oberfläche des Lagergehäuses 205 im Bereich des dritten Absatzes 265 oder durch ein in diesem Bereich mit dem Lagergehäuse 205 verbundenes weiteres Element, etwa eine Abdeckung des vierten Drehgelenks 155 gegen Spritzwasser, die das Lagergehäuse 205 becherförmig umgibt, begrenzt. Das Lagerspiel 262 bemisst sich in diesem Fall bezüglich des Lagergehäuses 205 bzw. des weiteren Elements.

In der dargestellt Ausführungsform erstreckt sich die Lagerbuchse 255 weiter in Richtung des zweiten Absatzes 260 als die topfförmige Ausformung des Steuerhebels 135. Eine Ausführungsform, bei der sich die topfförmige Ausformung des Steuerhebels 135 weiter in Richtung des zweiten Absatzes 260 erstreckt als die Lagerbuchse 255 ist ebenso möglich, in diesem Fall bemisst sich das Lagerspiel 262 zwischen dem zweiten Absatz 260 und dem unteren Ende der topfförmigen Ausformung.

Der vierte Abschnitt 235 der Blindlagerwelle 210 weist einen kleineren Durchmesser als der zweite Abschnitt 230 auf. In der in Fig. 2a dargestellten Ausführungsform entspricht der Durchmesser im Bereich des vierten Abschnitts 235 im Wesentlichen dem Durchmesser im Bereich des ersten Abschnitts 220. Im Bereich des Übergangs zwischen dem dritten Abschnitt 230 und dem vierten Abschnitt 235 besteht ein dritter Absatz 265. Im Bereich des vierten Abschnitts 235 ist die Blindlagerwelle 210 in einer korrespondierenden Aussparung des Lagergehäuses 205 aufgenommen. In einer bevorzugten Ausführungsform ist die Blindlagerwelle 210 in die Aussparung des Lagergehäuses 205 eingepresst, so dass im Bereich des vierten Abschnitts 235 Haftreibung zwischen der Blindlagerwelle 210 und dem Lagergehäuse 205 besteht. Arretierungselemente wie eine Verzahnung können die Blindlagerwelle 210 zusätzlich oder alternativ im Lagergehäuse 205 fixieren; weiter alternativ sind auch andere Verbindungsarten wie Kleben möglich.

Die Aussparung des Lagergehäuses 205 in axialer Richtung ist tiefer als der vierte Abschnitt 235. Der dritte Absatz 265 der Blindlagerwelle 210 liegt an einer korrespondierenden, nach oben gerichteten Oberfläche des Lagergehäuses 205 bündig an.

Nun Bezug nehmend auf Fig. 2b unterscheidet sich die hier dargestellte zweite Ausführungsform von der ersten, in Fig. 2a dargestellten Ausführungsform hauptsächlich dadurch, dass der dritte Abschnitt 230 der Blindlagerwelle 210 mit den Absätzen 260 und 265 fehlt und sich der zweite Abschnitt 225 bis zum vierten Abschnitt 235 durchzieht. Außerdem ist in der dargestellten Variante ein Spritzwasserschutz 270 vorgesehen, der vorzugsweise vor dem Montieren des Steuerhebels 135 an der Blindlagerwelle 210 über das Lagergehäuse 205 geschoben ist. Der Spritzschutz 170 ist im Wesentlichen topfförmig und liegt in radialer Richtung innen sowie in axialer Richtung oben am Lagergehäuse 205 an.

Vorzugsweise ist der Spritzschutz 270 aus einem Kunststoff hergestellt und so am Lagergehäuse 205 angebracht, dass Feuchtigkeit am Eindringen in einen Bereich zwischen der Blindlagerwelle 210 und dem Lagergehäuse 205 gehindert ist. Der Spritzwasserschutz 270 durchläuft eine optionale Abdeckung 275, die im Bereich des Spritzwasserschutzes 270 nach oben aufgeworfen ist. Die Abdeckung 275 kann zusätzlich zur Fernhaltung von Spritzwasser eine Haltefunktion auf das Lagergehäuse 205 auswirken. Vorzugsweise ist die Abdeckung 275 auf den Spritzwasserschutz 275 aufgepresst, so dass eine spritzwasserdichte Verbindung zwischen dem Spritzwasserschutz 270 und der Abdeckung 275 besteht.

Die Blindlagerwelle 210 ist nicht vollständig in das Lagergehäuse 205 eingetrieben; in radialer Richtung liegt jedoch der zweite Abschnitt 225 der Blindlagerwelle 210 trotzdem an einer radialen Öffnung im oberen Bereich des Spritzschutzes 270 an. In einer weiteren Ausführungsform kann die Blindlagerwelle 210 auch vollständig in das Lagergehäuse 205 eingetrieben sein. In beiden Fällen bemisst sich das Axialspiel 230 des Steuerhebels 135 auf der Blindlagerwelle 210 zwischen dem unteren Ende des Steuerhebels 135 und dem oberen Ende des Spritzschutzes 170.

In einer weiteren, nicht dargestellten Ausführungsform, die auf der in Fig. 2b dargestellten Ausführungsform basiert, entfällt der Spritzwasserschutz 275. Das Axialspiel 230 des Steuerhebels 135 auf der Blindlagerwelle 210 bemisst sich dann zwischen dem unteren Ende des Steuerhebels 135 und dem oberen Ende des Lagergehäuses 205.

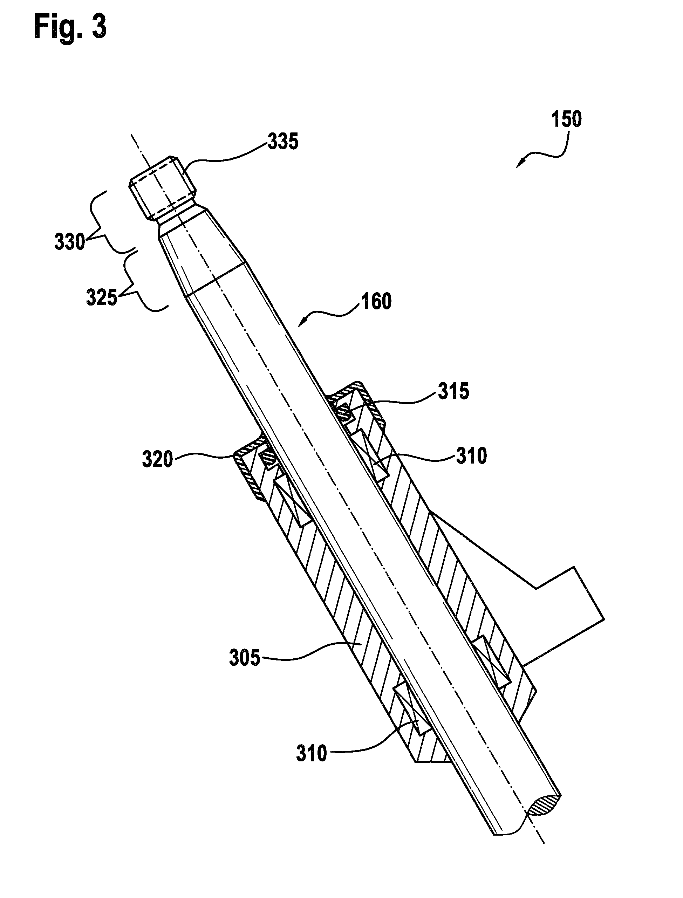

Fig. 3 zeigt das dritte Drehgelenk 150 des Wischsystems 100 aus Figur 1. Das dritte Drehgelenk 150 umfasst ein Lagergehäuse 305, welches zum Lagergehäuse 205 aus Fig. 2 korrespondiert. An entgegengesetzten axialen Enden sind Sinterbuchsen 310 in das Lagergehäuse 305 eingepresst. Durch die beiden Sinterbuchsen 310 verläuft die Welle 160, die den Antriebsmotor 165 mit dem Antriebshebel 130 in Fig. 1 verbindet. Die Sinterbuchsen 310 weisen einen axialen Abstand zueinander aus, der ausreicht, um die radialen bzw. Kippkräfte, die durch den Antriebshebel 130 eingekoppelt werden, gegenüber dem Lagergehäuse 305 abzustützen. Damit die Welle 160 genau genug durch die Sinterbuchsen 310 verläuft, werden die Sinterbuchsen 310 üblicherweise in das Lagergehäuse 305 eingepresst und anschließend gemeinsam kalibriert, bevor die Welle 160 eingeführt wird. Im Rahmen einer Montage in den Sinterbuchsen 310 wird die Welle 160 gefettet und nach oben mit einem O-Ring 315 und einer Dichtkappe 320 abgedichtet.

Im Bereich eines oberen Endes trägt die Welle 160 einen konischen Abschnitt 325 und einen Endabschnitt 330 mit einem Außengewinde 335. Bevorzugterweise entspricht das Gewinde 335 dem Gewinde 240 an der Blindlagerwelle 210 des vierten Drehgelenks 155 in Fig. 2. Der Antriebshebel 130 weist eine konische Ausnehmung auf, die zum konischen Abschnitt 325 der Welle 160 korrespondiert. Ist die Welle 160 durch die Aussparung des Antriebshebels 130 durchgeführt, so wird eine Mutter entsprechen der Mutter 245 aus Fig. 2 auf den Endbereich 330 der Welle 160 aufgesetzt und festgezogen. Dadurch wird die konische Aussparung des Antriebshebels 130 in axialer Richtung gegen den konischen Abschnitt 325 der Welle 160 gepresst, so dass in diesem Bereich eine hohe Haftreibungskraft entsteht, die den Antriebshebel 130 drehstabil mit der Welle 160 verbindet.

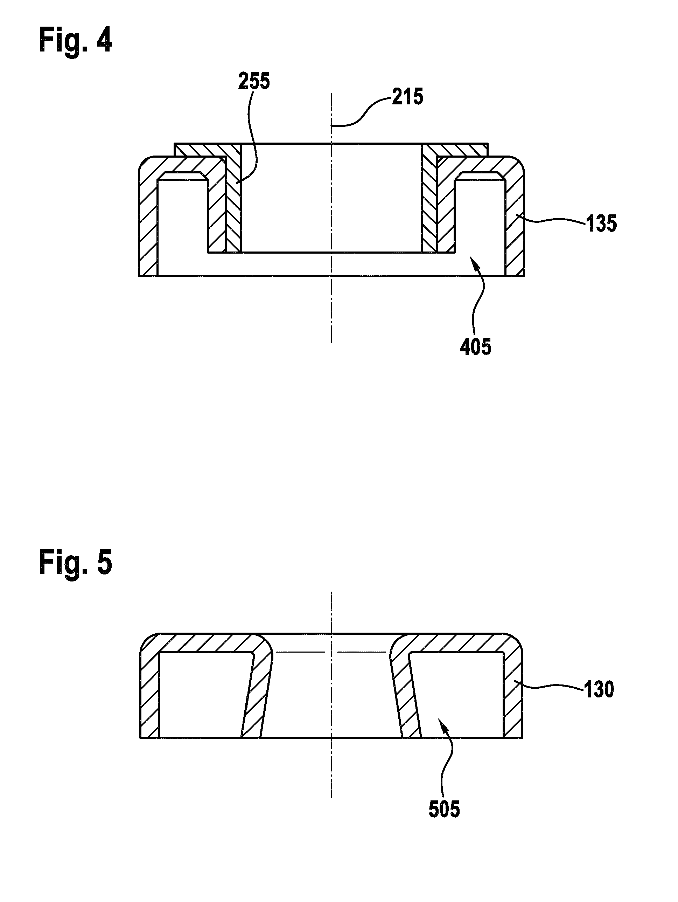

Fig. 4 zeigt einen Querschnitt durch den Steuerhebel 135 entsprechend der Darstellung von Fig. 2. Fig. 5 zeigt einen Querschnitt durch den Antriebshebel 150 in einer zur Darstellung von Fig. 4 korrespondierenden Perspektive.

Die Schnittansichten von Fig. 4 und Fig. 5 unterscheiden sich im Wesentlichen dadurch, dass eine topfförmige Ausformung 405 des Steuerhebels 135 in Fig. 4 im Wesentlichen zylindrisch ist, während eine korrespondierende topfförmige Ausformung 505 des Antriebshebels 130 in Fig. 5 im Wesentlichen konisch ist. Zudem ist in Fig. 4 in die zylindrische Aufnahme 405 des Steuerhebels 135 die Lagerbuchse 255 aus Fig. 1 eingesetzt.

Während im Stand der Technik das in Fig. 1 dargestellte Wischsystem 100 mit im Wesentlichen baugleichen dritten und vierten Drehgelenken 150 und 155 nach der in Fig. 3 dargestellten Bauweise ausgestattet sind, erlaubt es die Erfindung, das vierte Drehgelenk 155 durch die in Fig. 2 dargestellte Bauweise zu ersetzen. Der Steuerhebel 135, der nach dem Stand der Technik geformt ist, wie in Fig. 5 gezeigt, muss nur unwesentlich verändert werden, um die in Fig. 4 gezeigte Form zu erhalten. Die erfindungsgemäße Ausführungsform des vierten Drehgelenks 155 kann einfacher herstellbar sein als ein drittes Drehgelenk 150.

Dabei ist die Montage des Antriebshebels 130 an der Welle 160 weitgehend identisch zur Montage des Steuerhebels 135 an der Blindlagerwelle 210. In beiden Fällen wird der betreffende Hebel 130, 135 auf die entsprechende Welle 160, 210 aufgesetzt und mittels einer Mutter 245 an der Welle 160, 210 fixiert. Dieser Montagevorgang wird auch schon an einem Wischsystemen das Standes der Technik verwendet.

## Patentansprüche

1. Koppelgetriebe für ein Wischsystem (100) an einem Kraftfahrzeug (105), wobei das Koppelgetriebe folgende Elemente umfasst:
- einen Wischerarm (120);
- einen Antriebshebel (130) mit einem ersten Ende, das mittels eines ersten Drehgelenks (140) mit dem Wischerarm verbunden ist;
- einen Steuerhebel (135) mit einem ersten Ende, das mittels eines zweiten Drehgelenks (145) mit dem Wischerarm (120) verbunden ist;
- ein drittes Drehgelenk (150) zur Lagerung eines zweiten Endes des Antriebshebels (130) gegenüber einem Karosserieelement (110) des Kraftfahrzeugs (105);
- wobei das dritte Drehgelenk (150) eine Welle (160) zur Übertragung einer Drehbewegung eines Antriebsmotors (165) auf den Antriebshebel (130) umfasst; und
- ein viertes Drehgelenk (155) zur Lagerung eines zweiten Endes des Steuerhebels (155) gegenüber dem Karosserieelement (110);
**dadurch gekennzeichnet, dass**
- das vierte Drehgelenk (155) eine Achse (210) umfasst, gegenüber welcher der Steuerhebel (135) drehbar gelagert ist.

2. Koppelgetriebe nach Anspruch 1, **dadurch gekennzeichnet, dass** der Steuerhebel (135) eine Buchse (255) umfasst, in der die Achse (210) des vierten Drehgelenks (155) drehbar aufgenommen ist.

3. Koppelgetriebe nach Anspruch 1 oder 2, **dadurch gekennzeichnet, dass** das vierte Drehgelenk (155) ein Lagergehäuse (205) zur Verbindung mit dem Karosserieelement (110) aufweist, mit welchem die Achse (210) starr verbunden ist.

4. Koppelgetriebe nach einem der vorangehenden Ansprüche, **dadurch gekennzeichnet, dass** die Welle (160) des dritten Drehgelenks (150) und die Achse (210) des vierten Drehgelenks (155) an ihren Enden Außengewinde (240, 335) zur Aufnahme von Muttern (245) aufweisen, die den Antriebshebel (130) bzw. den Steuerhebel (135) in axialer Richtung fixieren.

5. Koppelgetriebe nach Anspruch 4, **dadurch gekennzeichnet, dass** die Achse (210) einen Absatz (250) zur Begrenzung der axialen Position der Mutter (245) aufweist.

6. Koppelgetriebe nach Anspruch 5, **dadurch gekennzeichnet, dass** die Achse (210) einen weiteren Absatz (260) aufweist, wobei die axiale Position des Steuerhebels (135) zwischen der Mutter (245) und dem zweiten Absatz (260) begrenzt ist.

7. Koppelgetriebe nach Anspruch 6, **dadurch gekennzeichnet, dass** eine axiale Ausdehnung des Steuerhebels (135) im Bereich des vierten Drehgelenks (155) kleiner als ein Abstand zwischen den beiden Absätzen (250, 260) ist, so dass der Steuerhebel (135) ein vorbestimmtes Axialspiel (262) auf dem vierten Drehgelenk (155) hat.
